# EUROPEAN PATENT SPECIFICATION

(11) **EP 3 938 687 B1**
(45) Date of publication and mention of the grant of the patent: **24.07.2024**
(21) Application number: 20713378.6
(22) Date of filing: 10.03.2020
(51) Int. Cl.: B05B 1/08, B05B 7/14, B05C 19/06, B28B 11/04, B65G 53/46, G01F 11/28, B28B 11/00, B05C 9/06, B05C 19/04

(54) **DISTRIBUTING DEVICE FOR POWDER MATERIALS**
VERTEILVORRICHTUNG FÜR PULVERMATERIALIEN
DISPOSITIF DE DISTRIBUTION POUR MATIÈRES PULVÉRULENTES

(30) Priority: 11.03.2019 IT 201900003497
(43) Date of publication of application: 19.01.2022
(73) Proprietor: System Ceramics S.p.A., 41042 Fiorano Modenese MO (IT)
(72) Inventor: GHIRELLI, Ivan, 42014 Castellarano (Reggio Emilia) (IT)
(74) Representative: Casadei, Giovanni
(86) International application number: PCT/IB2020/052045
(87) International publication number: WO 2020/183353

(56) References cited:
- EP-A1- 0 224 621
- EP-A1- 0 224 621
- EP-A1- 0 318 247
- EP-A1- 0 318 247
- EP-A2- 0 974 437
- EP-A2- 0 974 437
- CN-A- 103 568 113
- CN-A- 103 568 113
- US-A1- 2012 097 258
- US-A1- 2012 097 258

## Description

The present invention relates to a dispensing bar and a dispensing method for materials in powder or granule form.

In particular, the invention relates to a dispensing bar and a dispensing method which allow the controlled deposit of a granular or powdered material.

The invention is useful for the decoration of ceramic tiles.

As is known, the decoration of ceramic tiles substantially occurs with two main techniques.

A first technique involves applying the decoration on the raw tile by means of ink jet printers. The decoration is applied on the tile after pressing and before firing.

A second technique involves applying the decoration, always in a step prior to firing the tile, in the form of granular or powdered material.

In this second technique, the granular or powdered material which forms the decoration is deposited by means of devices of varying nature.

Some of the devices currently used involve the deposit of the material by gravity, through unloading openings provided with a closure means which can be operated in a controlled manner. The current devices, even those of a more complex type, do not however allow precisely controlling the amount or the position of the material deposited. The current devices, in substance, are only useful for realizing decorations in the form of relatively imprecise shading or veining.

Examples of known dispensing devices are disclosed in documents EP 0 318 247 and EP 0 224 621. Said dispensing devices are adopted do release measured quantities of a granular material inside a container.

EP 0 974 437 A2 discloses a dispensing bar according to the preamble of claim 1 and a dispensing method according to the preamble of claim 11.

The object of the present invention is to offer a dispensing bar and a dispensing method for granular or powdered materials that allow overcoming the drawbacks of the currently available devices and methods.

An advantage of the dispensing device according to the present invention is that it allows a very precise deposit of the material.

Another advantage of the dispensing device according to the present invention is that it has no moving mechanical members for controlling the dispensing of the powdered material.

Another advantage of the device is that it is very compact and lightweight, suited to be moved and positioned with ease.

A further advantage of the device, due to its compact size, is that of being able to be used in a relatively high number of items, to speed up the application of the decoration.

Further characteristics and advantages of the present invention will become more apparent in the following detailed description of an embodiment of the present invention, illustrated by way of non-limiting example in the attached figures, wherein:
- figure 1 shows a top view of a dispensing device used in a dispensing bar according to the present invention;
- figure 1a shows a schematic isometric view of a dispensing device used in a dispensing bar according to the present invention, shown in partial section according to the planes A-A of figure 1;
- figure 2 shows a sectional view of the device of figure 1, according to the plane D-D of figure 1a;
- figure 3 shows a sectional view of the device of figure 1, according to the plane E-E of figure 2;
- figure 4 shows a schematic and vertical elevation view of a decorating machine according to the present invention;
- figure 5 shows a plan view of the machine of figure 4;
- figure 6 shows an enlarged view of zone III of figure 4;

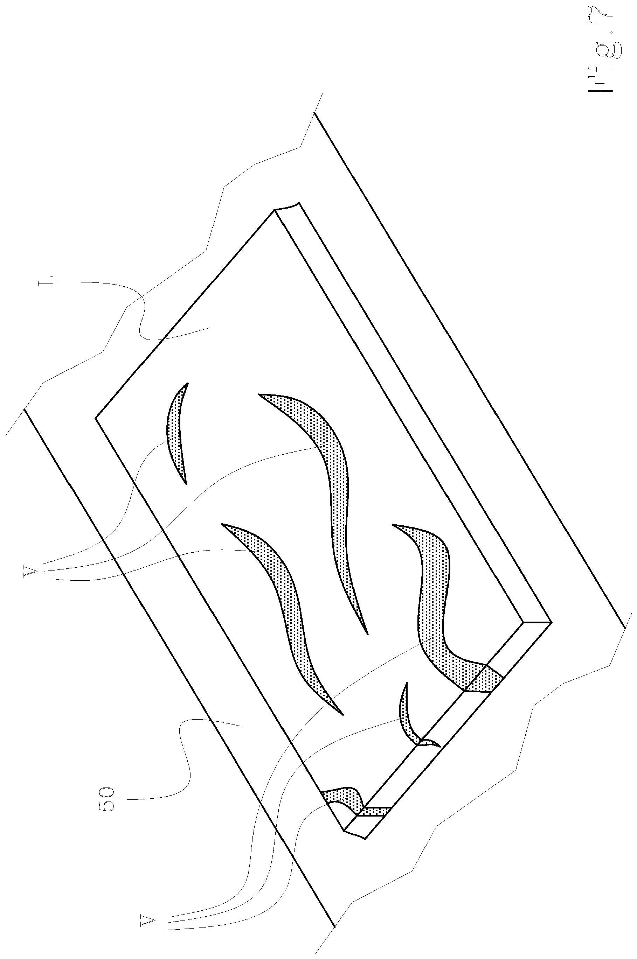

- figure 7 schematically shows a layer of material deposited with the machine according to the present invention;

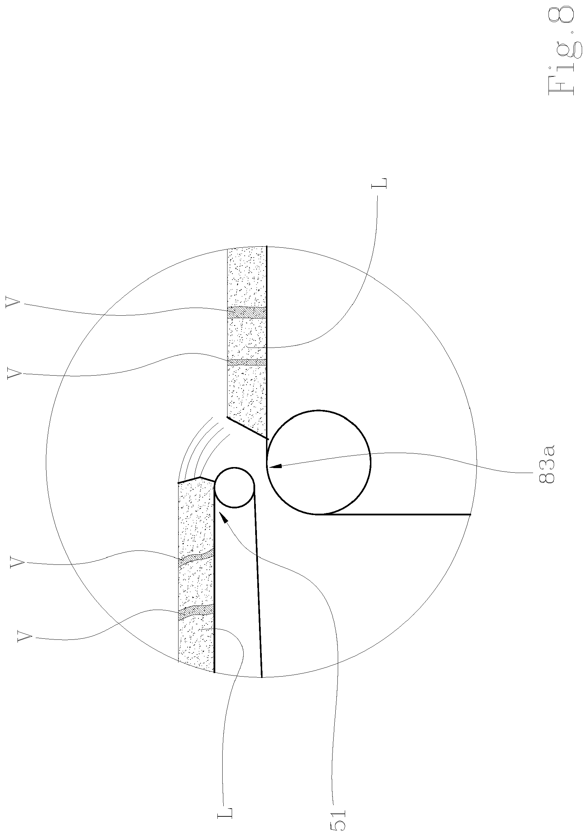

- figure 8 shows an enlarged view of zone V of figure 4.

The dispensing device used in a dispensing bar according to the present invention lends itself particularly well to the controlled dispensing of a loose material, in granular or powdered form. An example of a material which can advantageously be dispensed through the device is atomised ceramic. In the following description, the loose material will be generically indicated as "product".

The dispensing device used in a dispensing bar according to the present invention comprises a dispensing channel (2a), provided with a longitudinal axis (X). In the embodiment shown, the dispensing channel (2a) is centrally symmetrical with respect to the longitudinal axis (X). Preferably, but not necessarily, the dispensing channel (2a) has a circular cross section in a plane perpendicular to the longitudinal axis (X), but it could be provided with an oval or ellipsoidal cross section. The dispensing channel (2a) could however have a different shape, for example it could have a prismatic shape, or it could have a quadrangular or polygonal contour on a section plane perpendicular to the longitudinal axis (X).

The dispensing channel has an inlet opening (21), for feeding the product, and an outlet opening (22) for dispensing the product.

Preferably the dispensing channel (2a) is arranged in such a way that the longitudinal axis has an inclination such as to allow the product to flow by gravity from the inlet opening (21) to the outlet opening (22). For example, the dispensing channel (2a) is arranged with the longitudinal axis (X) oriented vertically.

The inlet opening (21) can be connected to a tank or other device for feeding the product.

In the embodiment shown, the outlet opening (22) has a quadrangular contour on a section plane perpendicular to the longitudinal axis (X). Moreover, the outlet opening (22) is positioned at the end of an outlet section (22a) of the dispensing channel (2a) that has a diverging shape towards the outlet opening (22). Other forms for both the outlet opening (22) and the outlet section (22a) would however be possible, for example a cylindrical or truncated-conical shape. The embodiment shown in the figures offers the advantage of allowing the side by side arrangement of multiple outlet openings (22) in a compact configuration.

The dispensing device used in a dispensing bar according to the present invention comprises suction means which, on command, is arranged to retain at least a part of the product inside the dispensing channel (2a), so as to form an accumulation which obstructs the dispensing channel (2a) and prevents the flow of the product. In substance, the suction means is structured to cause an accumulation or stagnation of product which, by increasing the friction between the particles which form the product, causes the clogging and blocking of the dispensing channel (2a).

The suction means according to the present invention offers the important advantage of not compressing or squeeze the product. In fact, the product becomes clogged inside the dispensing channel (2a) substantially by means of the mutual friction of the particles. This is very advantageous for example in the case in which the product is atomised ceramic that, as known, is composed of hollow spherical particles. The advantage of not compressing or squeezing the product is also significant in the presence of an especially abrasive product.

In the illustrated embodiment, the suction means is placed in communication with the dispensing channel (2a). The suction means, on command, attracts and retains at least a portion of product inside the dispensing channel (2a). For example, the suction means retains at least a portion of product in contact with or near at least one inner surface (2c) of the dispensing channel (2a), to form an accumulation which obstructs the dispensing channel (2a). As already underlined, the product retained in contact with the inner surface (2c) of the dispensing channel (2a) reduces the section of passage of the latter and forms the accumulation or blockage that prevents the flow of the product. The deactivation of the suction means frees the product that can resume flowing along the dispensing channel (2a).

In substance, the suction means is arranged to produce a negative pressure which is placed in communication with the dispensing channel (2a). To this end, the suction means comprises for example a vacuum pump, or a circuit comprising a Venturi conduit placed in communication with the dispensing channel (2a). Other means and devices capable of producing a negative pressure are also suitable for the purpose .

In the illustrated embodiment, the dispensing device comprises one or more suction openings (23), formed through a wall of the dispensing channel (2a) and placed in communication with the suction means. In the embodiment shown, the device comprises a suction opening (23), formed through the wall that delimits the dispensing channel (2a). The suction opening (23) opens onto the inner surface (2c) of the dispensing channel (2a). In a possible embodiment, not shown, the dispensing device can be provided with a plurality of suction openings (23), in the form of micro-holes or holes of small diameter, formed through the wall of the dispensing channel (2a), which open onto the inner surface (2c) of the dispensing channel.

The suction openings (23) present are connected to the suction means.

In a condition of product flow through the dispensing channel (2a), the activation of the suction means produces a suction effect of the product in the direction of the suction opening (23). The product is thus attracted and retained in contact with or near the inner surface (2c) of the dispensing channel (2a), forming the accumulation which obstructs the channel (2a) itself. The deactivation of the suction means frees the accumulation of product, allowing the restoration of the flow.

The values of negative pressure can vary from 100mb to 400mb.

Preferably, a filter (20) is interposed between each suction opening (23) and the dispensing channel (2a). The filter (20) prevents the product from flowing through the suction opening (23). In the presence of the negative pressure or suction, i.e. in the condition of activation of the suction means, the product adheres to the filter (20).

In a possible embodiment, the filter (20) defines at least a portion of the wall of the dispensing channel (2a), or defines a portion of the inner surface (2c) of the dispensing channel. For example, if the dispensing channel (2a) has a prismatic shape, the filter (20) can be realized in planar shape, and define a portion of the wall of the dispensing channel at which the suction opening (23) opens. This applies to each suction opening (23) present.

In the absence of the filter (20), the product is retained in contact with the inner surface (2c) of the dispensing channel (2a). In the presence of the filter (20), the product is retained at least partly in contact with the surface of the filter (20). The product retained on the surface of the filter (20) is therefore located near the inner surface (2c) of the dispensing channel (2a), i.e. the filter (20) is interposed between the product and the inner surface (2c) of the dispensing channel (2a).

The filter (20) can be of various known structures. The structure of the filter must be chosen in relation to the characteristics of the product to be dispensed, i.e. the filter must be able to retain the particles or granules of the product to be dispensed.

In the embodiment shown, in which the dispensing channel (2a) is centrally symmetrical with respect to the longitudinal axis (X), the filter (20) has a tubular shape and is inserted into the dispensing channel (2a). The filter (20) internally delimits a passage (20a), i.e. a hole, which defines at least a section of the dispensing channel (2a). The filter (20) is overlapping the suction opening (23). Further suction openings (23) can possibly be positioned on the section of the dispensing channel (2a) occupied by the filter (20).

In this embodiment the product normally flows along the longitudinal axis (X), through the passage (20a) defined inside the filter (20) along the dispensing channel (2a). In the presence of an activation command of the suction means, the material adheres and is retained in the passage (20a) in contact with the filter (20), substantially in the area of the suction opening (23) and of the further suction openings (23) if present.

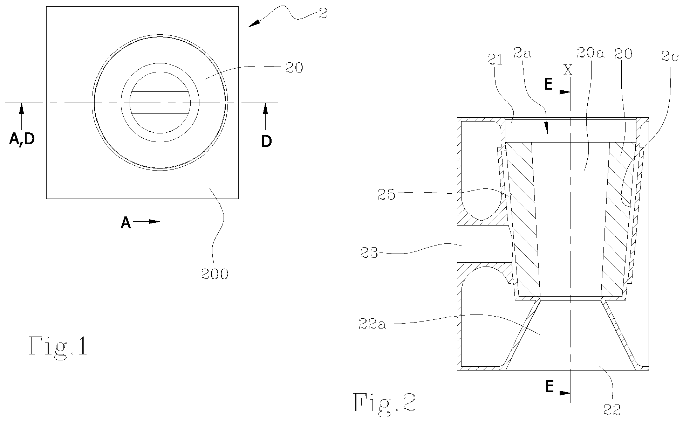

In the embodiment shown, the dispensing device comprises an annular chamber (25) concentric with the filter (20) and placed in communication with the suction means. As shown in figure 2, the annular chamber (25) is defined on a wall of the dispensing channel (2a), in the form of a recess in the wall itself. The filter (20) is inserted in the dispensing conduit (2a) overlapping the annular chamber (25) and separating the chamber (25) itself from the passage (20a) available for the flow of the product. The suction openings (23) present are positioned on a wall of the annular chamber (25), as shown in figure 2. The presence of the annular chamber (25) allows distributing the suction effect or the negative pressure produced by the suction means around the entire filter (20). In this way, the product is attracted and retained on a circular crown, i.e. on a ring-like surface of the filter (20), forming an equally annular accumulation that is able to very quickly block the dispensing conduit (2a).

To facilitate the restoration of the dispensing of the product after a step of closure, i.e. after a step of activation of the suction means, the dispensing device is provided with blowing means, placed in communication with the dispensing channel (2a) and arranged to produce a pressure that, in terms of absolute value, is greater than or equal to the negative pressure produced by the suction means in the dispensing channel (2a).

In a possible embodiment, one or more blowing openings (24) are formed through a wall of the dispensing channel (2a). In the solution which provides the filter (20), the blowing openings (24) are formed at the filter (20) itself, to direct the flow of air through the latter and to promote the detachment of the product. In the embodiment shown, one or more blowing openings (24) are positioned on the wall of the annular chamber (25). In an alternative embodiment, the flow of air produced by the blowing means could be introduced into the dispensing channel (2a) through the suction opening or openings (23), previously connected to the blowing means by means of a distributor, not shown, structured to alternately connect the blowing means or the suction means to the suction openings (23).

The control of the dispensing device substantially takes place through the control of the suction means and/or the blowing means, if present.

In the embodiment comprising only the suction means, the activation of the latter retains at least a portion of the product in contact with a wall of the dispensing channel (2a) causing the occlusion. The deactivation of the suction means frees the product that resumes flowing along the dispensing channel (2a).

In the case in which the blowing means is also provided, the control of the dispensing of the product can occur in different ways. In a first way, the dispensing of the material is controlled by deactivating the suction means and, simultaneously or subsequently, activating the blowing means. In a second way, the suction means can be maintained always active and, to allow the dispensing of the product, the blowing means is activated, whose effect contrasts and cancels the retaining effect produced by the suction means. In the solution in which the pressure produced by the blowing means is substantially equal, in absolute value, to the negative pressure produced by the suction means, the activation of the blowing means cancels the negative pressure produced by the suction means, causing the release of the product.

In the solution in which the pressure produced by the blowing means is greater, in absolute value, than the negative pressure produced by the suction means, the activation of the blowing means produces the introduction of an airflow into the dispensing channel (2a). The introduction of an airflow fluidizes the product, causing a rapid detachment from the wall of the dispensing channel (2a) and/or from the filter (20).

The activation/deactivation of the suction means and/or of the blowing means according to a predetermined time cycle allows varying the amount of dispensed product in a very precise manner. For example, it is possible to dispense the product in small subsequent amounts, defined through corresponding activation/deactivation cycles of the suction means and/or the blowing means.

The dispensing device used in a dispensing bar according to the present invention can be used to deposit the product, in a controlled manner, on an underlying plane or an underlying surface. Both the dispensing device and the deposit plane of the product can be movable through suitable motors.

For example, the dispensing device can be used to deposit the product on a movable conveyor plane, in predetermined positions and amounts. The movable plane can be driven in motion along a conveying direction, while the dispensing device can be translated along a direction horizontal and perpendicular to the conveying direction of the movable plane, and possibly also along a direction parallel to the conveying direction of the movable plane.

A predetermined number of dispensing devices are arranged according to the invention along an alignment direction (Z), arranged side by side, to realize a dispensing bar of predetermined length. The outlet openings (22) are side by side and are facing in a same direction. For example, the outlet openings (22) are facing downwards. By realizing an outlet opening (22) in a flattened form, as shown in the figures, it is possible to arrange the dispensing devices relatively close together, bringing the outlet openings (22) closer to each other. Preferably, the outlet openings (22) are arranged on a same dispensing plane, preferably horizontal. The dispensing bar allows defining a dispensing front of predetermined length along the alignment direction (Z) of the dispensing devices. For example, in the case summarized above of deposit on an underlying movable plane, the dispensing bar, arranged with the alignment direction of the dispensing devices transverse, in particular perpendicular, to the transport direction of the movable plane, substantially allows depositing the product over the entire width of the movable plane, understood as an extension measured perpendicular to the conveying direction, without the need to translate the dispensing bar transversely to the conveying direction.

The dispensing channel (2a), the suction opening or openings (23) and the blowing opening or openings (24) present are formed in a body (200). To define the dispensing bar, two or more dispensing devices (2) can be arranged side by side. Two or more dispensing devices (2) can be joined at the side surfaces of the respective bodies (200).

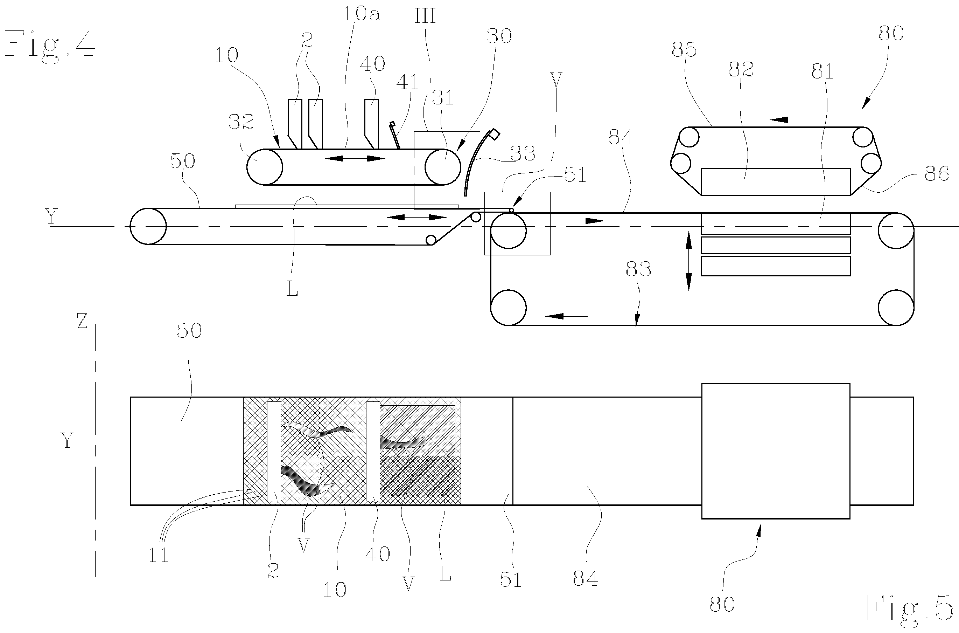

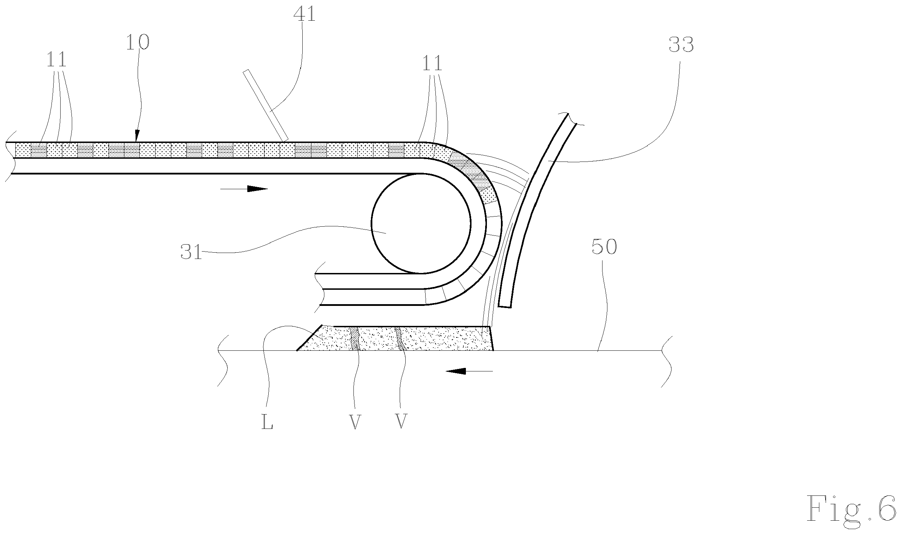

The possibilities of use synthesized above are particularly advantageous for a machine for the dry decoration of ceramic tiles, illustrated in figures 4, 5 and 6.

The machine comprises a support element (10), provided with a plurality of cavities (11) of predetermined shape and depth or height. Each of these cavities (11) has an opening that allows the entry of the product and a subsequent unloading of the product previously introduced. Each cavity (11) is delimited by a side wall and a bottom which can be substantially flat or curved. In the embodiment shown, the cavities (11) have a rhomboidal contour, but other forms are obviously possible. The rhomboidal shape of the cavities ensures a continuity of support with a doctor blade (41) that will be described in the following.

The support element (10) can be realized in the form of a flat element, in whose thickness the cavities (11) are formed. Alternatively, the cavities (11) can be structured in a manner such that they can be applied to the support element (10). In a possible embodiment, the support element (10) comprises a layer of flexible material, for example a rubber or plastic material, in whose thickness the cavities (11) are formed. In a particularly advantageous embodiment, the support element (10) comprises a flexible belt on which the cavities (11) are formed, which open onto the surface of the belt itself. For example, the cavities (11) can be formed by incision or impression on the surface of the flexible belt.

Preferably, but not necessarily, the cavities (11) are mutually identical and are distributed in a regular manner on the support element (10). The cavities (11) are adjacent to one another along the sides thereof, so as to be separated by a relatively thin edge. In other words, each of the cavities (11) defines a volume suitable to receive a predetermined amount of product for the decoration to be realized. Each cavity (11) can be filled in an independent manner from the others.

The machine comprises at least one dispensing device (2) used in a dispensing bar according to the present invention, arranged to deposit a predetermined quantity of product inside one or more predetermined cavities (11).

The dispensing device (2) can be provided with the possibility of moving with respect to the cavities (11), i.e. with respect to the support element (10). In particular, the dispensing device (2) is able to move such that it can dispense the product inside any of the cavities (11). Preferably, but not necessarily, both the cavities (11), by means of the support element (10), and the dispensing device (2) are provided with the possibility of translating along at least one direction of displacement. In the embodiment shown, the cavities (11) are movable, by means of the support element (10), along a longitudinal direction (Y), while the dispensing device (2) is movable along a transverse direction (Z), perpendicular to the longitudinal direction (Y). In the example shown, both directions (Y,Z) are horizontal. Both the cavities (11), and the dispensing device (2) could also be movable along a direction perpendicular to that indicated above, i.e. the cavities (11) could also be movable along the transverse direction (Z), and the dispensing device (2) could be movable along the longitudinal direction (Y).

In a possible embodiment, the machine comprises multiple dispensing devices (2), each of which can contain a colour or a mixture of predetermined colours. Each dispensing device (2) can be individually controlled to open and close in order to dispense the product in one or more pre-selected cavities (11).

Each dispenser (2) could also be movable in the above-described ways, i.e. be translatable along the transverse direction (Z) and/or along the longitudinal direction (Y).

As already mentioned, a predetermined number of dispensing devices (2) are arranged according to the invention side by side along an alignment direction, to realize a dispensing bar of predetermined length. This printing bar allows defining a dispensing front extended along the alignment direction of the dispensing devices. For example, the dispensing devices can be aligned along a direction parallel to the transverse direction (Z).

The printing bar arranged with the alignment direction of the dispensing devices (2) parallel or inclined with respect to the transverse direction (Z), and sufficiently extended, substantially allows depositing the product over the entire width of the support element (10), intended as extension measured parallel to the transverse direction (Z).

The machine according to the present invention further comprises an unloading device (30), arranged to move the cavities (11) from a loading position, wherein they can receive the product from the dispensing device (2), to an unloading position, wherein they can unload the product.

In a particularly advantageous embodiment, the unloading device (30) is structured to move the cavities (11) between a loading position, in which they are facing upwards to receive the product from the dispensing device (2), and an unloading position in which they are facing at least partially downwards to unload the product essentially by gravity.

In the embodiment in which the support element (10) is flexible, the unloading device (30) comprises at least one rotating roller (31), around which the support element (10) is at least partially wound. This roller (31) cause the support element (10) to rotate so as to progressively move the cavities (11) from the loading position to the unloading position. In a possible embodiment, the support element (10) thus assumes a cylindrical shape. During the rotation of the roller (31), the cavities (11) travel along a circumference along which, at least for a section, are facing upwards in the loading position, and for at least another section are facing downwards, in the unloading position. The dispensing device can be placed above the support element (10), to unload the product towards the cavities (11), in the area in which the latter are facing upwards in the loading position. In this embodiment, the cavities (11) could be formed on the surface of the roller (31), which would substantially assume the function of the support element (10).

In the preferred but not exclusive embodiment shown, the support element (10) is in the form of a flexible belt. The unloading device (30) comprises a pair of rollers (31,32) around which the support element (10) is wound, so as to define a closed loop path. The cavities (11) are facing towards the outside of said closed path.

Along the path defined by the rollers (31,32) the support element (10) has an upper section (10a), along which it slides forwards along the longitudinal direction (Y) and along which the cavities (11) are facing upwards, in the loading position. The dispensing device (2) can be placed at the top of the support element (10), i.e. above the upper section of the support element (10), so as to be able to unload the product downwards and towards the cavities (11).

The loading of the cavities (11) can occur by combining a forward movement of the support element (10) along a longitudinal direction (Y) with a displacement movement of the dispensing device (2) along a transverse direction (Z), perpendicular to the longitudinal direction (Y), as already previously underlined. In substance, while the support element (10) advances, the dispensing device (2), by means of the unloading conduits or nozzles, sends the product to the cavities (11) in a selective and targeted manner, possibly translating along the transverse direction (Z). This allows sending the product contained in the dispensing device towards predetermined cavities (11), and not towards others. Downstream of the dispensing device (2) a filling device (40) can be provided, equipped with an unloading opening arranged so as to fill the cavities (11) that have not been filled or have been partially filled by the dispensing device (2). The filling device (40) contains a second product which can be different than that dispensed by the dispensing device (2), for example for colour, particle size or other characteristics. The second product, unloaded from the filling device (40), fills the cavities (11) which remained empty or partially empty downstream of the dispensing device (2), and covers the cavities (11) already filled by the dispensing device (2). A doctor blade (41) is arranged in contact with the upper section of the support element (10), downstream of the filling device (40), to remove the product in excess of the depth or height of the cavities (11), and therefore protrudes from the upper surface of the support element (11). The doctor blade (41) is preferably solidly constrained to the filling device, i.e. is defined by an edge of the filling device (40). In this manner, downstream of the doctor blade (41), some of the cavities (11) are filled by the first product, unloaded from the dispensing device (2), other cavities (11) are filled by the second product, dispensed from the filling device (40), still other cavities (11) can be filled by both the first and the second product. The two materials in powdered form can thus be deposited in the cavities (11) so as to define a decorative pattern that comprehensively extends for the entire height of the cavities (11), i.e. can extend from the base to the top of each cavity (11). The decorative design is discretized, i.e. broken down in the mutually adjacent cavities (11), which maintain the shape stable. This is because each cavity (11) contains a predetermined quantity of product, and prevents that amount from mixing with the adjacent product. The filling of the cavities (11) described above can also be obtained using a dispensing device (2) provided with one or more dispensers, each of which is intended to dispense a product in one or more pre-selected cavities (11). For example, these dispensers can be placed consecutively one beside the other transversely and above the upper section of the support element (10). This allows creating particularly varied and elaborate decorative designs.

The filling of the cavities (11) can occur by combining a forward movement along the longitudinal direction (Y) of the support element (10) with a movement along the transverse direction (Z) of the dispensing device (2).

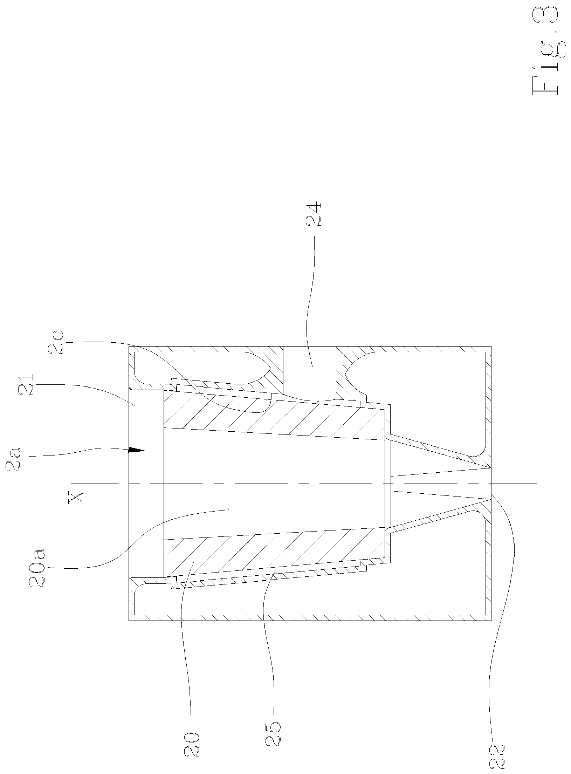

Alternatively, the support element (10) could be kept stationary, and the dispensing device (2), comprising any dispensers, could be movable both along the longitudinal direction (Y), and along the transverse direction (Z). As already indicated, the rollers (31,32) cause the support element (10) to slide along a closed path so as to progressively displace the cavities (11) from the loading position to the unloading position. In the passage from the loading position to the unloading position, the cavities (11) pass from a position in which they are facing upwards to a position in which they are facing downwards. During this passage, each cavity (11) can pour its content downwards. As schematically shown in figure 3, the passage of the cavities (11) from the loading position to the unloading position takes place progressively along the section of the support element (10) that turns around a first roller (31). When each cavity (11) is located facing downwards, i.e. after having travelled around the first roller (31), the pouring of its content is substantially complete. Turning around the second roller (32), the cavities (11) will move back into the loading position, to receive a new load of product.

In a possible embodiment, not shown, the unloading device (30) could be positioned in such a way as to unload the product contained in the cavities (11) directly inside the mould of a press.

In the solution shown, a deposit plane (50) is placed below the support element (10), for receiving the product unloaded by the cavities (11). A relative movement is provided between the support element (10) and the deposit plane (50) which is directed along the longitudinal direction (Y), which takes place at the same time as the unloading of the product from the cavities (11). This allows depositing the product, unloaded from the cavities (11), in a continuous layer (L) on the deposit plane (50).

The relative movement between the deposit plane (50) and the support element (10) can be obtained, for example, by maintaining the deposit plane (50) stationary and translating the support element (10), solidly constrained to the unloading device (30), along the longitudinal direction (Y), i.e. by making the rollers (31,32) translate, and the support element (10) associated thereto, along the longitudinal direction (Y).

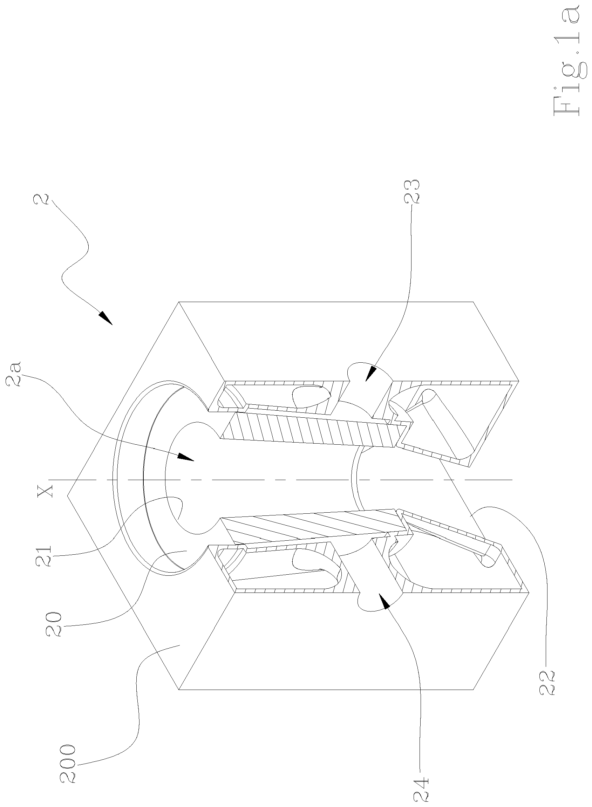

In a preferred embodiment, the relative movement between the deposit plane (50) and the support element (10) is obtained by sliding the deposit plane (50) along the longitudinal direction (Y), while the support element (10), despite being slidable along its path around the rollers (31,32), is on the whole static along the direction (Y). The sliding of the deposit plane (50) can be in the same direction or in the opposite direction with respect to the sliding of the upper section of the support element (10) in its movement around the rollers (31,32). Preferably, but not necessarily, the deposit plane (50) is in the form of a belt or mat slidably movable along a closed path defined by two or more rollers, as shown in figure 1.

In the embodiment shown, the product is unloaded from the cavities (11) and is deposited on the underlying deposit plane (50). As already indicated, the unloading of the cavities (11) takes place by means of the sliding of the support element (10), in the section in which the support element (10) rotates around the first roller (31). Along this section, the cavities (11) in fact pass from the loading position, in which their openings are facing upwards, to the unloading position, progressively turning their openings downwards and, at the same time, unloading their content of product downwards.

The relative movement between the deposit plane (50) and the support element (10) involves the deposit of the ceramic material in a continuous layer (L). By adjusting the relative speed between the deposit plane (50) and the support element (10) it is possible to adjust the height or thickness of the layer which is formed on the deposit plane (50). In the embodiment shown, in which the unloading device (30) is stationary, this variation can be obtained by varying the sliding speed of the deposit plane (50) and/or the sliding speed of the support element (10).

In a possible embodiment of the machine, a control processor is arranged to control the dispensing device (2) so as to fill the cavities (11) in relation to the decoration (V) which is to be realized in the layer (L). To this end, the control processor is equipped with an algorithm that allows processing an image of the decoration (V) to break it down into a series of volumes of product, of predetermined colour, each of which is attributed to a predetermined cavity (11). The control processor then adjusts the operation of the dispensing device (2) in such a way that each volume is introduced into a predetermined cavity (11). The correspondence between each volume and a respective cavity is established by making known to the control processor the position of each cavity (11), the speed of the support element (10) and the speed of the deposit plane (50), for example by means of an encoder, sensors or optical systems known in the art. In substance, starting from the decoration (V) which is to be realized, the control processor defines the number and the position of the volumes of the material necessary to obtain it, and attributes each volume to a cavity (11), in relation to the position in which the volume contained in the cavity (11) will be unloaded on the deposit plane (50).

In a preferred embodiment of the machine, the sliding of the deposit plane (50) is opposite with respect to the sliding of the upper section of the support element (10) in its movement around the rollers (31,32). This allows arranging the deposit plane (50) below the unloading device (30), so as to contain the dimensions of the machine along the longitudinal direction (Y). In substance, it is sufficient that one end portion of the deposit plane (50) extends beyond the front end of the support element (10), to allow the deposit of the layer (L), while the remaining part of the deposit plane (50) extends below the unloading device (30).

In order to improve the deposit of the material on the deposit plane (50), conserving the decoration distributed in the cavities (11) by means of the dispensing device (2), it is preferable to minimize the distance between the upper section of the support element (10) and the deposit plane (50). For example, the distance between the upper section of the support element (10) and the deposit plane (50) can be reduced by arranging a first roller (31) of reduced diameter.

To favour the maintenance of the structure of the decoration, it is possible to provide a containment barrier (33), arranged and shaped in such a way as to intercept the material which is unloaded from the cavities (11), to guide or switch the trajectory thereof in a predetermined way. In the embodiment shown, the containment barrier (33) is located near the first roller (31), i.e. near the area in which the unloading of the cavities (11) takes place. In the embodiment shown, the barrier (33) has a curved shape with a curvature opposite to that of the first roller (31), and is adjacent to the first roller (31). The barrier (33) extends for a predetermined arc, up to an area from which the material is to be unloaded towards the deposit plane (50).

The machine according to the present invention can be used to realize a decoration (V) comprising two or more layers overlapping each other. To this end, the machine can be equipped with two or more decorating units each comprising a support element (10), one or more dispensing devices (2) and an unloading device (30), arranged in succession or in such a way as to be able to act in succession with respect to one another. In this possible embodiment, different decorating units can be placed in succession above the deposit plane (50). The first decorating unit of the succession can deposit a first layer of product in the manners already described. The first layer of product, through the deposit plane (50), can be conveyed forwards along the longitudinal direction (Y) up to transiting below a second decorating unit which can deposit a second layer of product on the previous one, and so on for as many decorating units as are to be used. Each layer has its own decoration, realized through the dispensing device (2) and the cavities (11) of the relative decorating unit. For the realization of a decoration in multiple layers, it is also possible, as an alternative to the solution described above, to use only one decorating unit to carry out the deposit of multiple layers overlapping each other. For example, a decorating unit, comprising a support element (10), a dispensing device (2) and an unloading device (30), can be provided with the possibility of translating, along the longitudinal direction (Y), in opposite senses. In this case, the deposit plane (50) could be maintained stationary, and the decorating unit could carry out subsequent strokes forwards, to deposit successive layers overlapping each other, alternating with return strokes in the opposite direction. Alternatively, the decorating unit could be maintained stationary, and the deposit plane (50) could be actuated to slide along the longitudinal direction (Y) in opposite directions. In this case, the deposit plane (50) could carry out successive strokes forwards, to receive subsequent layers overlapping each other, alternating with return strokes in the opposite direction. In substance, the movements of the decorating unit and of the deposit plane (50) can be coordinated with each other so as to allow the successive deposit of multiple layers overlapping each other.

The decorations of the various overlapping layers can be aligned with each other in such a way as to obtain a comprehensive decoration (V), distributed in the overall thickness of the various overlapping layers. This thus allows realizing decorations with a veining effect (V) which, concretely, extend for the entire thickness of the overall layer of material, obtained by overlapping the various layers, each provided with its own decoration.

The layer (L) of product unloaded from the cavities (11) is subsequently subjected to pressing, whether it be a layer obtained with a single passage of the machine, or a layer obtained by the overlapping of several successive layers. To this end, as already mentioned, the machine according to the present invention could be arranged so as to unload the cavities (11) inside the mould of a press. Also in this case, the unloading of the material could occur in several overlapping layers.

In the solution shown, the layer of material unloaded from the cavities (11) on the deposit plane (50) is fed to a press (80). For example, the press (80) is in the form of a belt press, known in the sector for the pressing of large-format slabs. A press of this type comprises a bottom punch (81), provided with a pressing surface facing upwards. A top punch (82), provided with a pressing surface facing downwards, is located above the bottom punch. At least one of the two punches is movable nearingly and distancingly to and from the other in order to carry out a pressing of a layer (L) of powdered ceramic material. The press further comprises a movable plane (83), in the form of a flexible belt, which has an active section (84) arranged at least partially between the top punch (82) and the bottom punch (81). The press further comprises a second movable plane (85), in the form of a flexible belt, which has an active section (86) arranged between the active section (84) of the first movable plane (83) and the top punch (82).

The deposit plane (50) of the machine according to the present invention is placed upstream of the movable plane (83), so as to feed to the latter the layer of product unloaded from the cavities (11). The transfer of the layer (L) from the deposit plane (50) to the movable plane (83) preferably takes place according to the solution described in the publication WO2017051275. According to this solution, the deposit plane (50), in the section on which the layer (L) is deposited, is substantially aligned and contiguous, at a higher level, with respect to the active section (84) or the forward section of the movable plane (83), along the longitudinal direction (Y).

As can be seen in figure 5, the deposit plane (50) comprises a front end (51) that defines an end portion at which the deposit plane (50) defines a return curve. This front end (51) is at least partly overlying a rear end (83a) of the movable plane (83).

By activating in the same advancement the deposit plane (50) and the movable plane (83), i.e. in the same forward direction, the layer (L) is transferred from the deposit plane (50) to the movable plane (83) performing a modest jump downwards at the front end (51) of the deposit plane (50).

The deposit plane (50) and the movable plane (83) are movable independently of each other, i.e. each of them is provided with its own motor means operable independently of the other. This allows a particularly effective work cycle which considerably limits down times. In fact, when the deposit has been completed on the layer (L) on the deposit plane (50), the latter can be accelerated in the same advancement with the movable plane (83) of the press (80). The two planes (50,83) can be synchronized with one another so that, for example, the transfer of one layer (L) from the deposit plane (50) to the movable plane (83) takes place during the evacuation from the press (80) of an already pressed layer (L), keeping in due consideration the acceleration and deceleration steps necessary. This means that the activation of the movable plane (83) of the press (80) does not have to keep in consideration the deposit step of the layer (L) and can therefore take place at higher speeds with respect to that requested by the deposit of the layer (L).

The deposit of the material from the cavities (11) to the deposit plane (50) and the deposit of the material from the deposit plane (50) to the movable plane of the press (83) takes place from the top downwards, by gravity, along a direction of falling.

Since the support element (10), the deposit plane (50) and the movable plane (83) are in motion with respect to one another, between the falling material and the underlying deposit destination, deposit plane (50) or movable plane (83), a relative motion is produced that has a direct component parallel to the longitudinal direction (Y).

Because of this relative motion, a vein of material that should ideally be deposited vertically on a vertical plane parallel to the longitudinal direction (Y), is instead deposited inclined, from the top downwards, in the direction of the relative movement. The inclination of the vein is schematically illustrated in figures 3 and 5, referring to a decoration or veining (V). Given that two distinct deposits of material are provided, one from the cavities (11) to the deposit plane (50), the other from the deposit plane (50) to the movable plane (83) of the press, it is possible to correct the inclination of the vein of material, and therefore the inclination of the veining (V). To this end, the deposit plane (50) and the movable plane of the press (83) are operated in such a way as to produce relative movements in the opposite direction in the passage of the material from the cavities (11) to the deposit plane (50) and from this to the movable plane (83) of the press. For example, in the preferred embodiment of the machine, the sliding of the deposit plane (50) is opposite with respect to the sliding of the upper section of the support element (10) in its movement around the rollers (31,32). The relative movement that is produced in the fall of the material from the cavities (11) to the deposit plane (50) is thus directed in a first direction, from right to left in figures 1 and 3. This causes the inclination of the veining (V), as schematically shown in figure 3.

The transfer of the layer (L) from the deposit plane (50) to the movable plane (83) of the press (80) instead occurs in the same advancement direction. The relative movement that is produced in the fall or passage of the material from the deposit plane (50) to the movable plane (83) is thus directed in the opposite direction with respect to that which is produced in the passage from the cavities (11) to the deposit plane (50). This then allows inclining the veinings (V) in the opposite direction, as schematically shown in figure 5, so as to bring the veinings (V) to a substantially vertical inclination, or regardless to a desired inclination.

Furthermore, by adjusting the relative speed between the deposit plane (50) and the movable plane (83) it is possible to vary the thickness of the layer (L) on the movable plane (83).

## Claims

1. A dispensing bar for granular or powdered materials, wherein **it comprises** two or more dispensing devices (2) arranged side by side along an alignment direction (Z), wherein each dispensing device (2) comprises:
a dispensing channel (2a), provided with a longitudinal axis (X), an inlet opening (21) and an outlet opening (22);
the outlet openings (22) being arranged side by side and facing in a same direction, so as to define a deposit front of predetermined length;
**characterized in that** each dispensing device further comprises suction means, arranged to retain, on command, at least a portion of granular or powdered material inside the dispensing channel (2a), so as to form an accumulation which obstructs the dispensing channel (2a) and prevents the flow of material.

2. The dispensing bar according to claim 1, wherein the suction means is placed in communication with the dispensing channel (2a), so as to attract and retain at least a portion of granular or powdered material near or in contact with an inner surface of the dispensing channel (2a), to form an accumulation which obstructs the dispensing channel (2a).

3. The dispensing bar according to claim 2, comprising one or more suction openings (23), formed through a wall of the dispensing channel (2a) and placed in communication with the suction means.

4. The dispensing bar according to claim 3, comprising a filter (20), interposed between each suction opening (23) and the dispensing channel (2a).

5. The dispensing bar according to claim 4, wherein the filter (20) defines at least a portion of the wall of the dispensing channel (2a).

6. The dispensing bar according to claim 4, wherein the filter (20) has a tubular shape and is inserted into the dispensing channel (2a).

7. The dispensing bar according to claim 6, comprising an annular chamber (25) concentric with the filter (20) and placed in communication with the suction means.

8. The dispensing bar according to claim 1, comprising blowing means, placed in communication with the dispensing channel (2a) and arranged to produce a pressure that, in terms of absolute value, is greater than or equal to the negative pressure generated by the suction means in the dispensing channel (2a).

9. The dispensing bar according to claim 8, comprising one or more blowing openings (24), formed through a wall of the dispensing channel (2a).

10. The dispensing bar according to claim 1, wherein the outlet openings (22) are arranged on the same dispensing plane.

11. A method for dispensing a granular or powdered material in a controlled manner, comprising the following steps:
feeding the material to two or more dispensing channels (2a), side by side along an alignment direction (Z), each of which is provided with an outlet opening (22), wherein the outlet openings (22) are side by side and are facing a same direction;
to stop the dispensing, attracting and retaining at least a portion of the material in contact with a wall of each dispensing channel (2a);
to restore the dispensing, releasing the material from the wall of each dispensing channel (2a);
**characterized in that** the step of attracting and retaining at least a portion of the material in contact with a wall of each dispensing channel is carried out by means of a negative pressure.

12. The method according to claim 11, wherein the step of releasing the material from the wall of each dispensing channel (2a) is carried out by cancelling the negative pressure used to stop the dispensing.

13. The method according to claim 11, wherein the step of releasing the material from the wall of each dispensing channel (2a) is carried out by feeding a pressure to each dispensing channel (2a) that, in terms of absolute value, is greater than or equal to the negative pressure used to stop the dispensing.

14. A machine for the dry decoration of ceramic slabs or tiles, comprising:
a support element (10), provided with a plurality of cavities (11) of predetermined shape;
at least one dispensing bar according to any of the claims 1-10, arranged to deposit a predetermined quantity of powdered material inside one or more predetermined cavities (11);
an unloading device (30), arranged to move the cavities (11) from a loading position, wherein they can receive the powdered material from the dispensing bar, to an unloading position, wherein they can unload the powdered material.

15. The machine according to claim 14, wherein the unloading device (30) is structured to move the cavities (11) between a loading position, in which they are facing upwards to receive the powdered material from the dispensing bar, and an unloading position in which they are facing at least partially downwards to unload the powdered material essentially by gravity.

16. The machine according to claim 14, wherein the support element (10) comprises a flexible belt on which the cavities (11) are formed.

17. The machine according to claim 16, wherein the unloading device (30) comprises at least one rotating roller (31), around which the support element (10) is at least partially wound, which causes the support element (10) to rotate so as to progressively move the cavities (11) from the loading position to the unloading position.

18. The machine according to claim 14, comprising a deposit plane (50), placed below the unloading position of the cavities (11) so as to receive the powdered material unloaded by the cavities (11).

## Patentansprüche

1. Abgabestange für körnige oder pulverförmige Materialien, wobei sie zwei oder mehr Abgabevorrichtungen (2) umfasst, die entlang einer Ausrichtungsrichtung (Z) nebeneinander angeordnet sind, wobei eine jede Abgabevorrichtung (2) Folgendes umfasst:
einen Abgabekanal (2a), der mit einer Längsachse (X) versehen ist, eine Einlassöffnung (21) und eine Auslassöffnung (22);
wobei die Auslassöffnungen (22) nebeneinander angeordnet sind und in die gleiche Richtung weisen, um eine Ablagefront vorbestimmter Länge zu definieren;
**dadurch gekennzeichnet, dass** eine jede Abgabevorrichtung ferner Saugmittel umfasst, die angeordnet sind, um auf Befehl mindestens einen Teil des körnigen oder pulverförmigen Materials innerhalb des Abgabekanals (2a) zurückzuhalten, um eine Ansammlung zu bilden, die den Abgabekanal (2a) blockiert und den Materialfluss verhindert.

2. Abgabestange nach Anspruch 1, wobei die Saugmittel in Kommunikation mit dem Abgabekanal (2a) gebracht sind, um mindestens einen Teil des körnigen oder pulverförmigen Materials in der Nähe oder in Kontakt mit einer Innenfläche des Abgabekanals (2a) anzuziehen und zurückzuhalten, um eine Ansammlung zu bilden, die den Abgabekanal (2a) blockiert.

3. Abgabestange nach Anspruch 2, umfassend eine oder mehrere Saugöffnungen (23), die durch eine Wand des Abgabekanals (2a) ausgebildet und in Kommunikation mit den Saugmitteln gebracht sind.

4. Abgabestange nach Anspruch 3, umfassend einen Filter (20), der zwischen einer jeden Saugöffnung (23) und dem Abgabekanal (2a) angeordnet ist.

5. Abgabestange nach Anspruch 4, wobei der Filter (20) mindestens einen Abschnitt der Wand des Abgabekanals (2a) definiert.

6. Abgabestange nach Anspruch 4, wobei der Filter (20) eine rohrförmige Form aufweist und in den Abgabekanal (2a) eingesetzt ist.

7. Abgabestange nach Anspruch 6, umfassend eine ringförmige Kammer (25), die konzentrisch zum Filter (20) ist und in Kommunikation mit den Saugmitteln gebracht ist.

8. Abgabestange nach Anspruch 1, umfassend Blasmittel, die mit dem Abgabekanal (2a) in Kommunikation gebracht und angeordnet sind, um einen Druck zu erzeugen, der angesichts dessen Absolutwert größer oder gleich dem von den Saugmitteln in dem Abgabekanal (2a) erzeugten Unterdruck ist.

9. Abgabestange nach Anspruch 8, umfassend eine oder mehrere Blasöffnungen (24), die durch eine Wand des Abgabekanals (2a) ausgebildet sind.

10. Abgabestange nach Anspruch 1, wobei die Auslassöffnungen (22) auf derselben Abgabefläche angeordnet sind.

11. Verfahren zum kontrollierten Abgeben eines körnigen oder pulverförmigen Materials, umfassend die folgenden Schritte:
Zuführen des Materials zu zwei oder mehr Abgabekanälen (2a), die sich nebeneinander entlang einer Ausrichtungsrichtung (Z) befinden, von denen ein jeder mit einer Auslassöffnung (22) versehen ist, wobei die Auslassöffnungen (22) nebeneinander liegen und in dieselbe Richtung weisen;
Anziehen und Zurückhalten mindestens eines Teils des Materials in Kontakt mit einer Wand eines jeden Abgabekanals (2a), um das Abgeben zu stoppen;
Freisetzen des Materials von der Wand eines jeden Abgabekanals (2a), um die Abgabe wiederherzustellen;
**dadurch gekennzeichnet, dass** der Schritt zum Anziehen und Zurückhalten mindestens eines Teils des Materials in Kontakt mit einer Wand eines jeden Abgabekanals mittels eines Unterdrucks durchgeführt wird.

12. Verfahren nach Anspruch 11, wobei der Schritt zum Freisetzen des Materials von der Wand eines jeden Abgabekanals (2a) durch Aufheben des zum Stoppen der Abgabe verwendeten Unterdrucks durchgeführt wird.

13. Verfahren nach Anspruch 11, wobei der Schritt zum Freisetzen des Materials von der Wand eines jeden Abgabekanals (2a) durchgeführt wird, indem einem jeden Abgabekanal (2a) ein Druck zugeführt wird, der angesichts dessen Absolutwert größer oder gleich dem zum Stoppen der Abgabe verwendeten Unterdruck ist.

14. Maschine zum Trockendekorieren von Keramikplatten oder -fliesen, umfassend:
ein Trägerelement (10), das mit einer Vielzahl von Hohlräumen (11) vorbestimmter Form versehen ist;
mindestens eine Abgabestange nach einem der Ansprüche 1-10, die angeordnet ist, um eine vorbestimmte Menge an pulverförmigem Material in einem oder mehreren vorbestimmten Hohlräumen (11) abzulegen;
eine Entladevorrichtung (30), die angeordnet ist, um die Hohlräume (11) von einer Ladeposition, in der sie das pulverförmige Material von der Abgabestange empfangen können, in eine Entladeposition zu bewegen, in der sie das pulverförmige Material entladen können.

15. Maschine nach Anspruch 14, wobei die Entladevorrichtung (30) so aufgebaut ist, dass sie die Hohlräume (11) zwischen einer Ladeposition, in der sie nach oben zeigen, um das pulverförmige Material von der Abgabestange zu empfangen, und einer Entladeposition, in der sie zumindest teilweise nach unten zeigen, um das pulverförmige Material im Wesentlichen durch Schwerkraft zu entladen, bewegt.

16. Maschine nach Anspruch 14, wobei das Trägerelement (10) ein flexibles Band umfasst, an dem die Hohlräume (11) ausgebildet sind.

17. Maschine nach Anspruch 16, wobei die Entladevorrichtung (30) mindestens eine rotierende Rolle (31) umfasst, um die das Trägerelement (10) zumindest teilweise gewickelt ist, was bewirkt, dass sich das Trägerelement (10) dreht, um die Hohlräume (11) schrittweise von der Ladeposition in die Entladeposition zu bewegen.

18. Maschine nach Anspruch 14, umfassend eine Ablagefläche (50), die unterhalb der Entladeposition der Hohlräume (11) platziert ist, um das von den Hohlräumen (11) entladene pulverförmige Material zu empfangen.

## Revendications

1. Barre de distribution pour matières granulaires ou pulvérulentes, dans laquelle elle comprend deux ou plusieurs dispositifs de distribution (2) disposés côte à côte le long d'une direction d'alignement (Z), dans laquelle chaque dispositif de distribution (2) comprend :
un canal de distribution (2a), pourvu d'un axe longitudinal (X), d'une ouverture d'entrée (21) et d'une ouverture de sortie (22) ;
les ouvertures de sortie (22) étant disposées côte à côte et orientées dans une même direction, de manière à définir un front de dépôt d'une longueur prédéterminée ;
**caractérisée en ce que** chaque dispositif de distribution comprend de plus des moyens d'aspiration, disposés pour retenir, sur commande, au moins une partie de la matière granulaire ou pulvérulente à l'intérieur du canal de distribution (2a), de manière à former une accumulation qui obstrue le canal de distribution (2a) et empêche l'écoulement de la matière.

2. Barre de distribution selon la revendication 1, dans laquelle les moyens d'aspiration sont placés en communication avec le canal de distribution (2a), de manière à attirer et à retenir au moins une partie de la matière granulaire ou pulvérulente à proximité ou en contact avec une surface intérieure du canal de distribution (2a), pour former une accumulation qui obstrue le canal de distribution (2a).

3. Barre de distribution selon la revendication 2, comprenant une ou plusieurs ouvertures d'aspiration (23), formées à travers une paroi du canal de distribution (2a) et placées en communication avec les moyens d'aspiration.

4. Barre de distribution selon la revendication 3, comprenant un filtre (20), interposé entre chaque ouverture d'aspiration (23) et le canal de distribution (2a).

5. Barre de distribution selon la revendication 4, dans laquelle le filtre (20) définit au moins une partie de la paroi du canal de distribution (2a).

6. Barre de distribution selon la revendication 4, dans laquelle le filtre (20) a une forme tubulaire et est inséré dans le canal de distribution (2a).

7. Barre de distribution selon la revendication 6, comprenant une chambre annulaire (25) concentrique avec le filtre (20) et placée en communication avec les moyens d'aspiration.

8. Barre de distribution selon la revendication 1, comprenant des moyens de soufflage, placés en communication avec le canal de distribution (2a) et disposés pour produire une pression qui, en valeur absolue, est supérieure ou égale à la pression négative générée par les moyens d'aspiration dans le canal de distribution (2a).

9. Barre de distribution selon la revendication 8, comprenant une ou plusieurs ouvertures de soufflage (24), formées à travers une paroi du canal de distribution (2a).

10. Barre de distribution selon la revendication 1, dans laquelle les ouvertures de sortie (22) sont disposées sur le même plan de distribution.

11. Procédé de distribution d'une matière granulaire ou pulvérulente d'une manière contrôlée, comprenant les étapes suivantes :
alimenter la matière vers deux ou plusieurs canaux de distribution (2a), côte à côte le long d'une direction d'alignement (Z), chacun d'eux étant pourvu d'une ouverture de sortie (22), dans lequel les ouvertures de sortie (22) sont côte à côte et orientées dans une même direction ;
pour arrêter la distribution, attirer et retenir au moins une partie de la matière en contact avec une paroi de chaque canal de distribution (2a) ;
pour rétablir la distribution, libérer la matière de la paroi de chaque canal de distribution (2a) ;
**caractérisé en ce que** l'étape consistant à attirer et à retenir au moins une partie de la matière en contact avec une paroi de chaque canal de distribution est effectuée au moyen d'une pression négative.

12. Procédé selon la revendication 11, dans lequel l'étape consistant à libérer la matière de la paroi de chaque canal de distribution (2a) est effectuée en annulant la pression négative utilisée pour arrêter la distribution.

13. Procédé selon la revendication 11, dans lequel l'étape consistant à libérer la matière de la paroi de chaque canal de distribution (2a) est effectuée en alimentant chaque canal de distribution (2a) avec une pression qui, en valeur absolue, est supérieure ou égale à la pression négative utilisée pour arrêter la distribution.

14. Machine pour la décoration à sec de plaques ou de carreaux de céramique, comprenant :
un élément de support (10), pourvu d'une pluralité de cavités (11) de forme prédéterminée ;
au moins une barre de distribution selon l'une quelconque des revendications 1-10, conçue pour déposer une quantité prédéterminée de matière pulvérulente à l'intérieur d'une ou de plusieurs cavités prédéterminées (11) ;
un dispositif de déchargement (30), disposé pour déplacer les cavités (11) d'une position de chargement, dans laquelle elles peuvent recevoir la matière pulvérulente de la barre de distribution, à une position de déchargement, dans laquelle elles peuvent décharger la matière pulvérulente.

15. Machine selon la revendication 14, dans laquelle le dispositif de déchargement (30) est structuré pour déplacer les cavités (11) entre une position de chargement, dans laquelle elles sont orientées vers le haut pour recevoir la matière pulvérulente de la barre de distribution, et une position de déchargement dans laquelle elles sont orientées au moins partiellement vers le bas pour décharger la matière pulvérulente essentiellement par gravité.

16. Machine selon la revendication 14, dans laquelle l'élément de support (10) comprend une courroie flexible sur laquelle les cavités (11) sont formées.

17. Machine selon la revendication 16, dans laquelle le dispositif de déchargement (30) comprend au moins un rouleau rotatif (31), autour duquel l'élément de support (10) est au moins partiellement enroulé, ce qui entraîne la rotation de l'élément de support (10) de manière à déplacer progressivement les cavités (11) de la position de chargement à la position de déchargement.

18. Machine selon la revendication 14, comprenant un plan de dépôt (50), placé sous la position de déchargement des cavités (11) de manière à recevoir la matière pulvérulente déchargée par les cavités (11).
